# EUROPÄISCHE PATENTSCHRIFT

(11) **EP 1 104 882 B1**
(45) Veröffentlichungstag und Bekanntmachung des Hinweises auf die Patenterteilung: **10.09.2008**
(21) Anmeldenummer: 00250406.6
(22) Anmeldetag: 27.11.2000
(51) Int. Cl.: G01N 1/22

(54) **Sondenvorrichtung zur Entnahme von flüchtigen Komponenten aus Flüssigkeiten oder Gasen**
Probe for sampling volatile components in liquids or gases
Sonde de prélèvement de composants volatiles dans des liquides ou des gaz

(30) Priorität: 03.12.1999 DE 19959271
(43) Veröffentlichungstag der Anmeldung: 06.06.2001
(73) Patentinhaber: Biotechnologie Kempe GmbH, 10557 Berlin (DE)
(72) Erfinder: Kempe, Eberhard, Dipl.-Ing., 10719 Berlin (DE)
(74) Vertreter: Seuss, Thomas

(56) Entgegenhaltungen:
- US-A- 4 054 060
- US-A- 4 244 224
- US-A- 4 404 284
- US-A- 4 821 585

## Beschreibung

Die Erfindung betrifft eine Sondenvorrichtung zur Bestimmung der Konzentration leicht flüchtiger Komponenten in Flüssigkeiten und/oder Gasen, mit einem Sondenkörper aufweisend einen Sondenrumpf sowie einen für die leicht flüchtigen Komponenten permeablen Sondenfinger, wobei im Bereich des Sondenrumpfs oder des Sondenfingers ein Sensor für die leicht flüchtigen Komponenten eingerichtet ist, und mit einem dem Sondenfinger umhüllenden Schutzrohr mit Durchtrittsöffnungen. Solche Sondenvorrichtungen werden insbesondere in den Bereichen der Prozeßüberwachung und/oder Prozeßsteuerung von chemischen und biotechnologischen Prozessen eingesetzt.Hierbei wird die Konzentration einer oder mehrerer leicht flüchtiger Komponenten in einem Reaktionsraum gemessen und der Prozeß nach Maßgabe der ermittelten Konzentrationen gegebenenfalls gesteuert und/oder geregelt. Als leicht flüchtige Komponenten sind Stoffe gemeint, deren Siedepunkt typischerweise unter jenem des Wassers liegt. Beispielhafte Vertreter solcher Stoffe sind C1 bis C8 Kohlenwasserstoffe, C1 bis C6-Alkyl-Monoalkohole, C1 bis C6-Alkyl-Aldehyde, C1 bis C6 Alkyl-Ketone, C1 bis C6 Alkyl-Carboxylsäuren, Benzol, alkylsubstituiertes Benzol, Phenole u.dgl.. Insbesondere meßbar sind oxidierbare leicht flüchtige organische Verbindungen. Der Sensor ist von der Umgebung abgeschlossen und leicht flüchtige Komponenten haben nur über den permeablen Sondenfinger Zutritt zum Sensor. Als Sensoren kommen beispielsweise handelsübliche Halbleiterdetektoren u.dgl. in Frage. Die Permeabilität des Sondenfingers ist dadurch eingerichtet, daß über den Ausnehmungen aufweisenden Sondefinger, diese Ausnehmungen abdekkend, ein geeignetes permeables Material angeordnet ist. Das permeable Material ist typischerweise als Permeationsmembran ausgebildet und hinsichtlich der Werkstoffauswahl erfolgt für den Durchschnittsfachmann unschwer eine Abstimmung auf die zu messende leicht flüchtige Komponente. Das Schutzrohr dient dazu, eine solche Permeationsmembran vor mechanischen Beschädigungen zu schützen.

Eine Sonde des eingangs genannten Aufbaus ist beispielsweise bekannt aus der Literaturstelle EP 0 174 417 B1. Die insofern bekannte Sonde hat sich hervorragend bewährt. Es hat sich jedoch gezeigt, daß diese Sonde hinsichtlich der Handhabbarkeit verbesserungsfähig ist. Bei der Sonde des Standes der Technik wird üblicherweise mittels beispielsweise einer Überwurfmutter in einem Flansch eines Reaktionsgefäßes befestigt, wobei dann der Sondenfinger in einen Reaktionsraum ragt. Nachteilig hierbei ist, daß bei Reinigungs-und/oder Wartungsarbeiten an der Sonde und/oder dem Sondenfinger die Sonde insgesamt manuell entfernt werden muß, was aufwendig ist. Hierbei ist weiterhin nachteilig, daß im Zuge des Ausbaus (und Wiedereinbaus) der Sonde das Reaktionsgefäß für eine gewisse Zeitspanne offen bleibt. Dies stört insbesondere im Falle biotechnischer Prozesse, da biotechnische Prozesse besonderen Anforderungen hinsichtlich der Sterilität (Sicherheit gegen Kontamination des Reaktionsraumes mit den Prozeß störenden Mikroorganismen) unterliegen.

Die Literaturstelle US-4,404,284 beschreibt eine Messsonde mit zweikoaxialen und perforierten Hüllrohren, welche gegeneinander verdrehbar sind, wodurch die Sonde von einem Messraum abtrennbar ist.

Der Erfindung liegt daher das technische Problem zugrunde, eine Sonde zur Bestimmung der Konzentration leicht flüchtiger Komponenten anzugeben, welche leicht in ein Reaktionsgefäß einführbar und auch wieder ausführbar ist und mit welcher in biotechnologischen Prozessen eine Kontamination des Reaktionsraumes im Zuge beispielsweise einer Sondenfingerreinigung praktisch ausgeschlossen ist.

Zur Lösung dieses technischen Problems lehrt die Erfindung, daß das Schutzrohr als Kolben einer Schleusenvorrichtung mit einer Meßstellung und einer Servicestellung des Kolbens ausgebildet ist, wobei der Kolben zwischen der Meßstellung und der Servicestellung hin- und herschiebbar ist, und daß die Durchtrittsöffnungen des Kolbens mit der Maßgabe angeordnet sind, daß der Kolben zugleich die Funktion einer Schieberventilhülse aufweist, wobei der Sondenfinger über die Durchtrittsöffnungen in der Meßstellung mit einem Meßraum und in der Servicestellung mit einem vom Meßraum abgetrennten Serviceraum verbunden ist. - Als Kolben ist eine Bauform bezeichnet, welche mit außenliegenden Dichtflächen in zylinderförmigen Führungsflächen hin-und hergleiten kann. Der Meßraum ist in der Regel durch den Reaktionsraum eines Prozesses gebildet. Dem Meßraum ist ein gasdicht abschließbarer Serviceraum gleichsam nebengeschaltet. Das Schutzrohr erhält durch die Ausbildung der Erfindung eine doppelte Funktion.

Einerseits wird eine Funktion als Kolben eingerichtet und andererseits eine Funktion als Schieberventilhülse. Das Schutzrohr ist also gleichzeitig Schieberventilhülse und Antriebselement hierfür. Im Ergebnis wird erreicht, daß mittels des Schutzrohres der Sondenfinger wechselweise mit dem Meßraum und dem Serviceraum in Verbindung bringbar ist. Es versteht sich, daß der Serviceraum wiederum so betrieben wird, daß eine Kontamination nicht stattfinden kann. In der Praxis erfolgt ein Service der Sonde im Bereich des Sondenfingers dann wie folgt. Während der Messung verbindet das Schutzrohr den Meßraum über die Durchtrittsöffnungen mit dem Sondenfinger und trennt gleichzeitig den Meßraum von dem Serviceraum gasdicht ab. Durch Antrieb des als Kolben ausgebildeten Schutzrohres erfolgt eine Verschiebung des Schutzrohres, wobei der Sondenfinger von dem Meßraum abgetrennt und mit dem Serviceraum verbunden wird. In der Servicestellung sind wiederum Meßraum und Serviceraum hermetisch voneinander abgeschlossen. Der Serviceraum läßt typischerweise die Zufuhr und Abfuhr von (sterilen) Reinigungsmedien u.dgl. zu. Nach dem Service erfolgt der umgekehrte Vorgang, wie vorstehend beschrieben und die insofern gewartete Sonde ist dann wieder mit dem Meßraum verbunden.

Mit der Erfindung wird erreicht, daß der Meßraum im Zuge einer Wartung der Sonde bzw. eines Wiedereinsetzens der Sonde zu keiner Zeit mit einer kontaminierten Umgebung in Kontakt kommt. Zudem läßt sich eine Wartung des Sondenfingers ohne aufwendigen Ausbau der Sonde durchführen.

In einer bevorzugten Ausführungsform der Erfindung ist die Schleusenvorrichtung pneumatisch betätigbar, wobei ein Zylinderraum eingerichtet ist, in welchem der einen Kolbenring aufweisende Kolben durch wechselseitige Druckbeaufschlagung auf verschiedene Seiten des Kolbenrings zwischen der Meßstellung und der Servicestellung hin- und herschiebbar ist. Solche pneumatisch betätigbaren Schleusenvorrichtungen sind aus der Praxis im Zusammenhang mit pH-Sonden an sich bekannt. Grundsätzlich sind aber auch andere Antriebe, beispielsweise elektromagnetisch und/oder elektromotorisch möglich, wobei dann im Bereich der Sonde und/oder des Kolbens geeignete mechanische Antriebselemente, beispielsweise ein Spindelgetriebe, einzurichten sind.

Zweckmäßigerweise weist der Serviceraum zumindest einen Anschluß für Spülfluide auf. Spülfluide können flüssig oder gasförmig sein. In Frage kommt beispielsweise sterilisiertes Wasser, ggf mit üblichen Zusatzstoffen zur Reinigung. Ansonsten sind, in Abstimmung mit dem im Meßraum durchzuführenden Prozeß die verschiedensten Spülfluide möglich. Es ist lediglich zweckmäßig darauf zu achten, daß ein Spülfluid den im Meßraum ablaufenden Prozeß nicht aus chemischen oder biochemischen Gründen negativ beeinflußt, da im Zuge der Verschiebung des Schutzrohres zwischen der Meßstellung und der Servicestellung kurzzeitig eine Verbindung zwischen dem Meßraum und dem Serviceraum entsteht. Typischerweise wird der Serviceraum zwei Anschlüsse für Spülfluide aufweisen, einen Zuführanschluß und einen Abführanschluß.

Eine hinsichtlich der baulichen Ausführung vorteilhafter Ausführungsform ist dadurch gekennzeichnet, daß der Kolben den Kolbenring an dem dem Meßraum abgewandten Ende trägt und/oder daß der Sondenrumpf und der Kolben durch eine Schraubverbindung im Bereich des Kolbenrings verbunden sind. Es empfiehlt sich, daß der Sondenrumpf sich unmittelbar an den Kolbenring anschließend um zumindest eine Kolbenhublänge L erstreckt und außenseitig zumindest auf Kolbenhublänge L eine Sondendichtfläche trägt. Der Kolben kann an dem Meßraum zugewandten Ende einen in der Servicestellung den Meßraum vom Serviceraum gasdicht abschließenden Kolbenboden aufweisen. Der Kolben kann weiterhin in dem dem Meßraum zugewandten Bereich eine Kolbendichtfläche tragen, mittels welcher der Serviceraum von dem Zylinderraum sowohl in der Servicestellung als auch in der Meßstellung gasdicht abgeschlossen ist und mittels welcher der Meßraum von dem Serviceraum in der Meßstellung gasdicht abgeschlossen ist. Bei einer Kombination der vorstehenden baulichen Merkmale ist im Ergebnis eine Ausführungsform geschaffen, in welcher der Kolben mit zugeordneten Dichtelementen des Serviceraums diesen gegen die Umgebung abdichtet. Der Zylinderraum wiederum ist an seinem dem Meßraum zugewandten Ende gegen den Kolben abgedichtet und an seinem dem Meßraum abgewandten Ende gegen den Sondenrumpf.

Die Durchtrittsöffnungen in dem Kolben können grundsätzlich beliebig ausgeführt werden. Im Hinblick auf eine lange Lebensdauer der Dichtelemente des Serviceraumes empfiehlt es sich, die Durchtrittsöffnungen als in Kolbenlängsrichtung zwischen dem Kolbenboden und der Kolbendichtfläche verlaufende Schlitze auszuführen. Die pneumatische Betätigung kann mit üblichen pneumatischen Fluiden durchgeführt werden, wobei die Betätigung mittels Druckluft (2 bis 10 bar, vorzugsweise 3 bis 5 bar), bevorzugt ist.

Im folgenden wird die Erfindung anhand von lediglich ein Ausführungsbeispiel darstellenden Figuren näher erläutert. Es zeigen:
- Fig. 1:: eine erfindungsgemäße Sondenvorrichtung in einer Servicestellung,
- Fig. 2:: den Gegenstand der Figur 1, jedoch in einer Meßstellung und
- Fig. 3a,b:: eine Detailansicht der Sondenvorrichtung in zwei verschiedenen Ansichten.

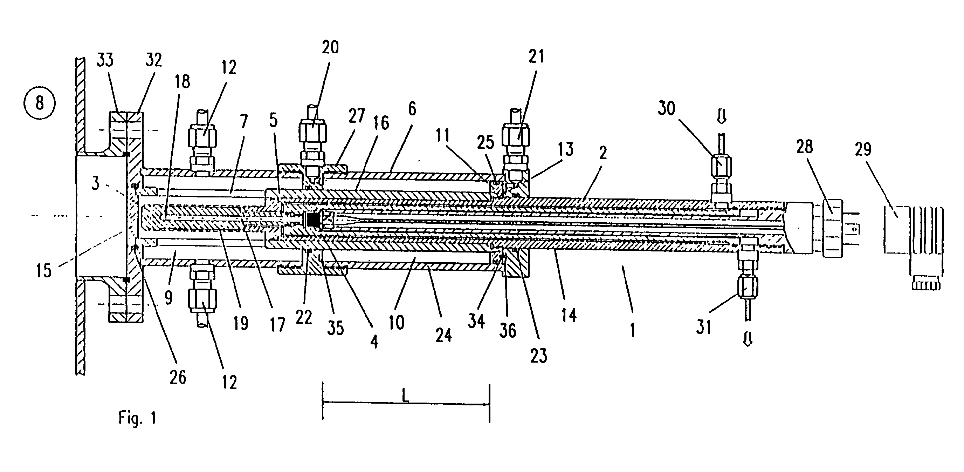

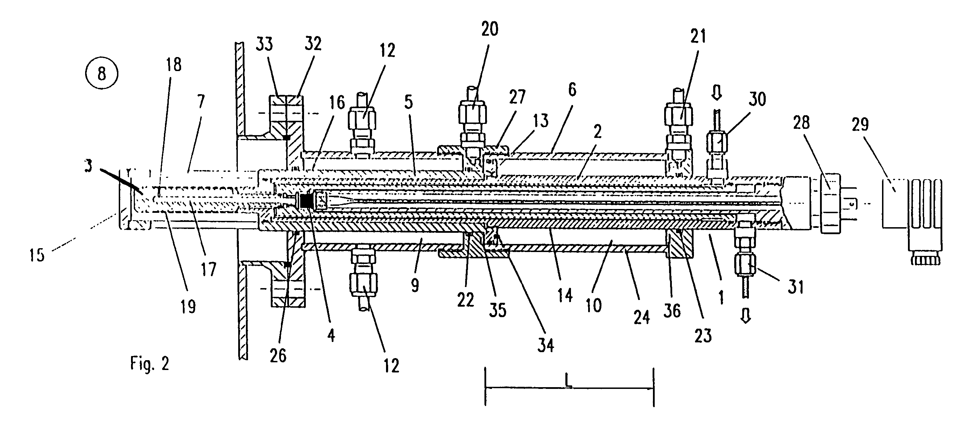

In den Figuren 1 und 2 erkennt man zunächst eine Sondenvorrichtung, welche der Bestimmung von C1 bis C3 Alkylalkoholen in einem biotechnischen Prozeß, nämlich einem Gärprozeß, dient. Die Sondenvorrichtung weist einen Sondenkörper 1, aufweisend einen Sondenrumpf 2 sowie einen für die leicht flüchtigen Komponenten permeablen Sondenfinger 3, auf. Im Bereich des Sondenrumpfes 2 ist ein Sensor 4 für die leicht flüchtige Komponente eingerichtet, im Ausführungsbeispiel ein SnOₓ-Detektor. Der Detektor ist über einen im Sondenfinger 3 eingerichteten Zentralkanal 17 mit radial verlaufender Zugangsbohrung 18 mit der Innenseite einer Permeationsmembran 19 verbunden. Die gegenüberliegende Seite der Permeationsmembran 19 ist zum Schutz vor mechanischen Beschädigungen mit einem den Sondenfinger 3 umhüllenden Schutzrohr 5 mit Durchtrittsöffnungen 7 versehen. Ansonsten sind der Übersichtlichkeit halber nicht näher bezeichnete Kanäle für Trägergas eingerichtet, welche mit Zuführ- und Abführanschlüssen 30, 31 für Trägergas verbunden sind.

Man erkennt weiterhin, daß das Schutzrohr als (im Ausführungsbeispiel einstückiger) Kolben 5 einer Schleusenvorrichtung 6 ausgebildet ist. In der Darstellung der Figur 1 befindet sich der Kolben 5 bzw. der Sondenrumpf 2 in einer Servicestellung. Dies ist daran erkenntlich, daß die Durchtrittsöffnungen 7 sich im Bereich des Serviceraums 9 befinden. Durch Verschiebung des Kolbens 5 einschließlich des Sensorrumpfes 2 (in der Fig. 1 nach links) kann der Kolben 5 aus der Servicestellung in eine Meßstellung verschoben werden, welche in der Fig. 2 wiedergegeben ist. Die Verschiebung entspricht dabei einer Kolbenhublänge L. Entsprechend der Fig. 2 sind dann die Durchtrittsöffnungen 7 im Bereich des Meßraumes 8 angeordnet.

Die Schleusenvorrichtung ist mittels Druckluft pneumatisch betätigbar, wozu ein Zylinderraum 10 eingerichtet ist, in welchem der einen Kolbenring 11 aufweisende Kolben 5 durch wechselseitige Druckbeaufschlagung auf verschiedene Seiten des Kolbenrings 11 zwischen der Meßstellung und der Servicestellung hin- und herschiebbar ist. Die wechselweise Druckbeaufschlagung erfolgt über die Steuerluftanschlüsse 20 und 21. Der Serviceraum 9 weist zwei Anschlüsse 12 für Spülfluide auf. Hierbei kann einer der Anschlüsse 12 als Zuführanschluß und der andere Anschluß 12 als Abführanschluß dienen.

In den Figuren erkennt man, daß der Kolben 5 den Kolbenring 11 an dem dem Meßraum 8 abgewandten Ende trägt. Der Sondenrumpf 2 und der Kolben 5 sind durch eine Schraubverbindung 13 im Bereich des Kolbenrings 11 miteinander verbunden. Diese Schraubverbindung 13 erlaubt es, den Sondenrumpf 2 mit dem Sondenfinger 3 aus dem Kolben 5 herauszuschrauben und der Sondenvorrichtung zu entnehmen, und zwar ohne weitere Zerlegung der Sondenvorrichtung und/oder der Schleusenvorrichtung. Der Sondenrumpf 2 schließt sich bei zusammengesetzter Sondenvorrichtung insofern unmittelbar an den Kolbenring an und erstreckt sich um zumindest eine Kolbenhublänge L über diesen hinaus. Der Sondenrumpf 2 weist außenseitig zumindest auf Kolbenhublänge L eine Sondendichtfläche 14 auf. Es versteht sich, daß der Außendurchmesser der Schraubverbindung 13 kleiner oder gleich dem Außendurchmesser der Dichtfläche 14 ist. Der Zylinderraum 10 ist von der Umgebung somit mittels des zwischen Kolben 5 und Zylinder 24 wirkenden Dichtelements 22 sowie mittels des zwischen dem Zylinder 24 und der Dichtfläche 14 wirkenden Dichtelements 23 abgetrennt. Der Kolbenring 11 ist gegenüber dem Zylinder 24 über das Dichtelement 25 abgedichtet. Im Ausführungsbeispiel sind die Dichtelemente 22,23 und 25 als O-Ringe aus einem gummielastischen und gegenüber den eingesetzten Medien und Substanzen resistenten Werkstoff ausgebildet. Entsprechendes gilt für die weiteren im folgenden erläuterten Dichtelemente.

Der Kolben 5 weist an seinem dem Meßraum 8 zugewandten Ende einen in der Servicestellung den Meßraum 8 vom Serviceraum 9 gasdicht abschließenden Kolbenboden 15 auf. Hierzu ist das Dichtelement 26 eingerichtet. Die Abdichtung des Serviceraums gegen die Umgebung sowie gegen den Meßraum 8 finden somit mittels der beiden gegen den Kolben 5 wirkenden Dichtelemente 22 und 26 statt. Hierzu trägt der Kolben 5 in dem dem Meßraum 8 zugewandten Bereich eine Kolbendichtfläche 16, mittels welcher der Serviceraum 9 von dem Zylinderraum 10 sowohl in der Servicestellung als auch in der Meßstellung gasdicht abgeschlossen ist und mittels welcher der Meßraum 8 von dem Serviceraum 9 in der Meßstellung gasdicht abgeschlossen ist. Die Durchtrittsöffnungen 7 sind im einzelnen als in Kolbenlängsrichtung zwischen dem Kolbenboden 15 und der Kolbendichtfläche 16 verlaufende Schlitze ausgebildet.

Weiterhin erkennt man, daß der Zylinder 24 in seinem Mittelbereich, nämlich zwischen dem Zylinderraum 10 und dem Serviceraum 9, reversibel trennbar ist. Hierzu ist das Verbindungselement 27 eingerichtet, in welches zwei Teilstücke des Zylinders 24 abdichtend einschraubbar sind.

Schließlich erkennt man in den Figuren 1 und 2 einen elektrischen Anschluß 28 mit zugeordnetem Stecker 29 zur Kontaktierung des Sensors 4 sowie die Zuführ- und Abführanschlüsse 30,31 für Trägergas. Im Ausführungsbeispiel handelt es sich um eine sogenannte Trägergassonde, mit welcher vergleichsweise kurze Ansprechzeiten erreicht werden. Die Schleusenvorrichtung 6 weist einen Verbindungsflansch 32 auf, mit welchem sie an einen korrespondierenden Verbindungsflansch 33 des Meßraumes 8 anschließbar ist.

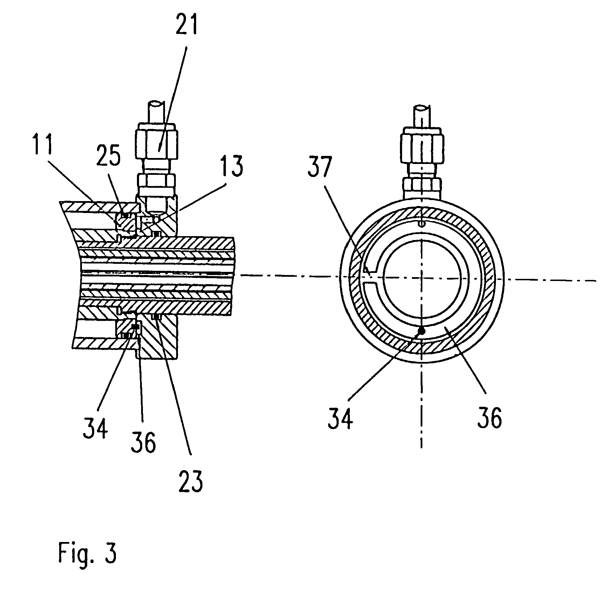

In der Figur 3 ist ein besonderes Detail dargestellt, welches eine Doppelfunktion erfüllt. In der Darstellung erkennt man, daß eine innere Stirnfläche des Zylinderraumes 10 eine Ringnut 36 aufweist, welche sich kreisförmig in der Stirnfläche erstreckt und dem Kolbenring 11 gegenübersteht. Die Ringnut weist einen Unterbrechungsteg 37 auf.

In der dargestellten Servicestellung greift ein am Kolbenring angebrachtes Verdrehschutzelement 34, ein Stift, in die Ringnut 36 ein. Bevorzugt ist es, daß in der gegenüberliegenden Stirnfläche des Zylinderraumes 10 eine entsprechende Ringnut 35 (siehe Figuren 1 und 2) und am Kolbenring gegenüberliegend ein entsprechendes Verdrehschutzelement eingerichtet sind, da dann die gleichen, folgend erläuterten Funktionen auch in der Meßstellung erhalten werden.

Einerseits gewährleistet die Ringnut, daß ein ausreichend großer Teil der der Ringnut gegenüberliegenden Fläche des Kolbenrings 11 der Druckluft ausgesetzt wird im Ansteuerungsfalle. Hierdurch wird das "Anlaufen" des in einer Endstellung befindlichen Kolbenrings bei Druckluftbeaufschlagung verbessert. Der Unterbrechungssteg 37 wiederum bewirkt in Verbindung mit dem Verdrehschutzelement 34, daß die Schraubverbindung 13 gelöst und hergestellt werden kann, da im Zuge einer Lösung oder Verschraubung das Verdrehschutzelement 34 gegen den Unterbrechungssteg stößt und den Kolben 5 insofern gegen weiteres Verdrehen sichert.

## Patentansprüche

1. Sondenvorrichtung zur Bestimmung der Konzentration leicht flüchtiger Komponenten in Flüssigkeiten und/oder Gasen,
mit einem Sondenkörper (1) aufweisend einen Sondenrumpf (2) sowie einen für die leicht flüchtigen Komponenten permeablen Sondenfinger (3), wobei im Bereich des Sondenrumpfes (2) oder des Sondenfingers (3) ein Sensor (4) für die leicht flüchtigen Komponenten eingerichtet ist, und
mit einem den Sondenfinger (3) umhüllenden Schutzrohr (5) mit Durchtrittsöffnungen (7),
**dadurch gekennzeichnet,**
**daß** das Schutzrohr (5) als Kolben (5) einer Schleusenvorrichtung (6) mit einer Meßstellung und einer Servicestellung des Kolbens (5) ausgebildet ist, wobei der Kolben (5) zwischen der Meßstellung und der Servicestellung hin- und herschiebbar ist, und
**daß** die Durchtrittsöffnungen (7) des Kolbens (5) mit der Maßgabe angeordnet sind, daß der Kolben (5) zugleich die Funktion einer Schieberventilhülse aufweist, wobei der Sondenfinger (3) über die Durchtrittsöffnungen (7) in der Meßstellung mit einem Meßraum (8) und in der Servicestellung mit einem vom Meßraum (8) abgetrennten Serviceraum (9) verbunden ist.

2. Sondenvorrichtung nach Anspruch 1, **dadurch gekennzeichnet, daß** die Schleusenvorrichtung pneumatisch betätigbar ist, wobei ein Zylinderraum (10) eingerichtet ist, in welchem der einen Kolbenring (11) aufweisende Kolben (5) durch wechselseitige Druckbeaufschlagung auf verschiedene Seiten des Kolbenrings (11) zwischen der Meßstellung und der Servicestellung hin- und herschiebbar ist.

3. Sondenvorrichtung nach Anspruch 1 oder 2, **dadurch gekennzeichnet, daß** der Serviceraum (9) zumindest einen Anschluß (12) für Spülfluide aufweist.

4. Sondenvorrichtung nach einem der Ansprüche 1 bis 3, **dadurch gekennzeichnet, daß** der Kolben (5) den Kolbenring (11) an dem dem Meßraum (8) angewandten Ende trägt.

5. Sondenvorrichtung nach einem der Ansprüche 1 bis 4, **dadurch gekennzeichnet, daß** der Sondenrumpf (2) und der Kolben (5) durch eine Schraubverbindung (13) im Bereich des Kolbenrings (11) verbunden sind.

6. Sondenvorrichtung nach einem der Ansprüche 1 bis 5, **dadurch gekennzeichnet, daß** der Sondenrumpf (2) sich unmittelbar an den Kolbenring (11) anschließend um zumindest eine Kolbenhublänge L erstreckt und außenseitig zumindest auf Kolbenhublänge L eine Sondendichtfläche (14) trägt.

7. Sondenvorrichtung nach einem der Ansprüche 1 bis 6, **dadurch gekennzeichnet, daß** der Kolben (5) an seinem dem Meßraum (8) zugewandten Ende einen in der Servicestellung den Meßraum (8) vom Serviceraum (9) gasdicht abschließenden Kolbenboden (15) aufweist.

8. Sondenvorrichtung nach einem der Ansprüche 1 bis 7, **dadurch gekennzeichnet, daß** der Kolben (5) in dem dem Meßraum (8) zugewandten Bereich eine Kolbendichtfläche (16) trägt, mittels welcher der Serviceraum (9) von dem Zylinderraum (10) sowohl in der Servicestellung als auch in der Meßstellung gasdicht abgeschlossen ist und mittels welcher der Meßraum (8) von dem Serviceraum (9) in der Meßstellung gasdicht abgeschlossen ist.

9. Sondenvorrichtung nach einem der Ansprüche 1 bis 8, **dadurch gekennzeichnet, daß** die Durchtrittsöffnung (7) als in Kolbenlängsrichtung zwischen dem Kolbenboden (5) und der Kolbendichtfläche (16) verlaufende Schlitze ausgebildet sind.

10. Sondenvorrichtung nach einem der Ansprüche 1 bis 9, **dadurch gekennzeichnet, daß** die pneumatische Betätigung mittels Druckluft durchführbar ist.

## Claims

1. A probe device for determining the concentration of highly volatile components in liquids and/or gases,
the probe comprising a probe body (1) with a probe core (2) and a probe finger (3), which is permeable for the highly volatile components, a sensor (4) being provided in the area of probe core (2) or in the area of probe finger (3), said sensor sensing the highly volatile components, and
a protective tube (5) enclosing probe finger (3), said protective tube having passage openings (7),
**characterized by**
that protective tube (5) is configured as a piston (5) of a sluice device (6) having a piston (5) measuring position and a piston (5) servicing position, piston (5) being slidable forwards and backwards between the measuring position and the servicing position, and
that passage openings (7) of piston (5) are disposed such that piston (5) has in addition the function of a slider valve sleeve, probe finger (3) being connected over passage openings (7) in the measuring position to a measuring space (8), and probe finger (3) being connected over passage openings (7) in the servicing position to a servicing space (9) separated from measuring space (8).

2. A probe device according to claim 1, **characterized by** that said sluice device is pneumatically operable, a cylindrical space (10) being provided where piston (5) including a piston ring (11) is slidable forwards and backwards between the measuring position and the servicing position by alternating pressure application on different sides of piston ring (11).

3. A probe device according to claim 1 or 2, **characterized by** that servicing space (9) comprises at least one port (12) for admitting rinsing fluids.

4. A probe device according to one of claims 1 to 3, **characterized by** that piston (5) carries piston ring (11) at the end directed away from measuring space (8).

5. A probe device according to one of claims 1 to 4, **characterized by** that probe core (2) and piston (5) are connected by a screw connection (13) in the area of piston ring (11).

6. A probe device according to one of claims 1 to 5, **characterized by** that probe core (2) extends immediately adjacent to piston ring (11) by at least one piston stroke length L and carries outside a probe sealing face (14) at least on one piston stroke length L.

7. A probe device according to one of claims 1 to 6, **characterized by** that piston (5) carries, at its end directed towards measuring space (8), a piston bottom (15), said piston bottom sealing measuring space (8) in a gas tight manner in the servicing position against servicing space (9).

8. A probe device according to one of claims 1 to 7, **characterized by** that piston (5) carries in the area directed towards measuring space (8) a piston sealing face (16), by means of which servicing space (9) is sealed in the servicing position and in the measuring position in a gas-tight manner against cylindrical space (10) and by means of which measuring space (8) is sealed in the measuring position in a gas-tight manner against servicing space (9).

9. A probe device according to one of claims 1 to 8, **characterized by** that passage openings (7) are adapted as slots extending in a longitudinal direction of the piston between the bottom of piston (5) and piston sealing face (16).

10. A probe device according to one of claims 1 to 9, **characterized by** that the device may be pneumatically operated with pressurized air.

## Revendications

1. Dispositif à sonde pour déterminer la concentration de composants hautement volatils dans des liquides et/ou gaz,
la sonde comprenant un corps de sonde (1) avec un noyau de sonde (2) et un doigt de sonde (3), qui est perméable pour les composants hautement volatils, un capteur (4) étant prévu dans la zone du noyau de sonde (2) ou dans la zone du doigt de sonde (3), ledit capteur détectant les composants hautement volatils, et
un tuyau protecteur (5) enveloppant le doigt de sonde (3), ledit tuyau protecteur ayant des ouvertures de passage (7),
**caractérisé en ce**
**que** le tuyau protecteur (5) est configuré comme un piston (5) d'un dispositif d'éclusage (6) ayant une position de mesurage du piston (5) et une position de service du piston (5), le piston (5) étant coulissant vers l'avant et vers l'arrière entre la position de mesurage et la position de service, et
**que** les ouvertures de passage (7) du piston (5) sont disposées de telle manière que le piston (5) ait en addition la fonction d'un manchon de vanne à glissière, le doigt de sonde (3) étant lié par l'intermédiaire des ouvertures de passage (7) dans la position de mesurage à un espace de mesurage (8), et le doigt de sonde (3) étant lié par l'intermédiaire des ouvertures de passage (7) dans la position de service à un espace de service (9) séparé de l'espace de mesurage (8).

2. Dispositif à sonde selon la revendication 1, **caractérisé en ce que** ledit dispositif d'éclusage est pneumatiquement opérable, un espace cylindrique (10) étant prévu, où le piston (5) comprenant un segment de piston (11) est coulissant vers l'avant et vers l'arrière entre la position de mesurage et la position de service par application alternative de pression sur des côtés différents du segment de piston (11).

3. Dispositif à sonde selon la revendication 1 ou 2, **caractérisé en ce que** l'espace de service (9) comprend au moins un orifice (12) pour des fluides de rinçage.

4. Dispositif à sonde selon une des revendications 1 à 3, **caractérisé en ce que** le piston (5) porte le segment de piston (11) à l'extrémité dirigée dans le sens opposé à l'espace de mesurage (8).

5. Dispositif à sonde selon une des revendications 1 à 4, **caractérisé en ce que** le noyau de sonde (2) et le piston (5) sont liés par une liaison à vis (13) dans la zone du segment de piston (11).

6. Dispositif à sonde selon une des revendications 1 à 5, **caractérisé en ce que** le noyau de sonde (2) s'étend immédiatement voisin au segment de piston (11) par au moins une longueur L de la course du piston et porte à l'extérieur une face de jointure étanche (14) de la sonde au moins sur une longueur L de la course du piston.

7. Dispositif à sonde selon une des revendications 1 à 6, **caractérisé en ce que** le piston (5) porte, à son extrémité dirigée vers l'espace de mesurage (8), une partie inférieure du piston (15), ladite partie inférieure du piston assurant l'étanchéité aux gaz de l'espace de mesurage (8) dans la position de service par rapport à l'espace de service (9).

8. Dispositif à sonde selon une des revendications 1 à 7, **caractérisé en ce que** le piston (5) porte dans la zone dirigée vers l'espace de mesurage (8) une face de jointure étanche (16) du piston, par laquelle l'espace de service (9) est rendu étanche aux gaz dans la position de service et dans la position de mesurage par rapport à l'espace cylindrique (10) et par laquelle l'espace de mesurage (8) est rendu étanche aux gaz dans la position de mesurage par rapport à l'espace de service (9).

9. Dispositif à sonde selon une des revendications 1 à 8, **caractérisé en ce que** les ouvertures de passage (7) sont configurées comme des fentes s'étendant dans une direction longitudinale du piston entre la partie inférieure du piston (5) et la face de jointure étanche (16) du piston.

10. Dispositif à sonde selon une des revendications 1 à 9, **caractérisé en ce que** le dispositif peut être opéré pneumatiquement au moyen d'air sous pression.
